# EUROPEAN PATENT APPLICATION

(11) **EP 2 447 687 A1**
(43) Date of publication of application: **02.05.2012**
(21) Application number: 11186552.3
(22) Date of filing: 25.10.2011
(51) Int. Cl.: G01J 5/00, G01J 5/02, G01J 5/08, G01J 5/10, G01J 5/60

(54) **Smart radiation thermometry system for real time gas turbine control and prognosis**

(30) Priority: 28.10.2010 US 914137
(71) Applicant: General Electric Company, Schenectady, NY 12345 (US)
(72) Inventor: Wang, Guanghua, Niskayuna, NY New York 12309 (US); Nirmalan, Nirm Velumylum, Niskayuna, NY New York 12309 (US); Estevadeordal, Jordi, Niskayuna, NY New York 12309 (US); Harper, Sean Patrick, Niskayuna, NY New York 12309 (US)
(74) Representative: Williams, Andrew Richard

(57) **Abstract**

A smart radiation thermometry system including a turbine component is provided. The smart radiation thermometry system includes an optical imaging sub-system configured to receive a continuous broad wavelength band radiation signal emitted by the turbine component. The thermometry system also includes a wavelength splitting sub-system in optical communication with the optical transmission sub-system, wherein the wavelength splitting sub-system receives the continuous broad wavelength band radiation signal, and splits the radiation signal into multiple sub-wavelength band signals. The thermometry system further includes at least one detector array in optical communication with the wavelength-splitting sub-system, wherein the at least one detector array receives the multiple sub-wavelength band signals, and outputs respective analog voltage signals for each of the signals. The thermometry system further includes at least one high-speed multi-channel analog-to-digital converter (ADC) electrically coupled to the at least one detector array, wherein the ADC digitizes respective analog voltage signals and outputs digital voltage signals. The thermometry system also includes at least one smart real time processing sub-system electrically coupled to the at least one detector array via the at least one high-speed multi-channel ADC. The at least one smart real time processing sub-system calculates temperature and emissivity of the turbine component based upon a computed radiance temperature, reflection correction and multi-wavelength algorithm. The smart real time processing sub-system also transmits data indicative of the temperature, emissivity and other plurality of parameters within a pre-determined time period to a communication unit. The smart real time processing sub-system also outputs emergency alarm signals and controls either directly or via a controller one or more actuators coupled to the gas turbine based upon the data to ensure optimum operation of the gas turbine within safe operating limits.

## Description

### BACKGROUND

The invention relates generally to smart radiation thermometry systems, and more particularly to, multi-wavelength radiation thermometry systems for real-time gas turbine control and prognosis.

It is well known that the efficiency of gas turbine can be increased by raising the turbine operating temperature. The increased operating temperature adversely affects the reliability, availability, and emissions of a gas turbine. As operating temperatures are increased, the thermal limits of certain engine components, especially hot gas path (HGP) components, such as the turbine blades and nozzles, may be exceeded, resulting in reduced service life or even material failure. Furthermore, thermal expansion and contraction of the components also affects clearances and their interfitting relationship with other components. Thus, it is desirable to monitor the temperature of turbine components during gas turbine operation to assure that they do not exceed the maximum rated temperature for an appreciable period of time. For example, the HGP components temperature information may be used by a gas turbine controller to adjust actuators to regulate the maximum working temperature by changing fuel flow rate, vane angle, and nozzle area etc. Furthermore, the measured temperature and trends may be used to predict the remaining life of expensive gas turbine components and estimate associated risks.

A common approach to monitoring turbine HGP components temperature is to indirectly measure the temperature of the gas leaving the turbine and to use this as an indication of the blade temperature. The turbine exit temperature may be measured by locating one or more temperature sensors, such as thermocouples, in the exhaust stream. Because the blade temperature is measured indirectly, it is relatively inaccurate. Thus, it does not permit optimum temperatures to be utilized because a wide safety margin must be maintained.

The drawbacks of indirect HGP components temperature measurement are well known, and approaches for measuring HGP components temperatures directly have been proposed. One direct measurement approach uses a single detection wavelength band radiation pyrometer located outside of the engine casing and having a field of view focused on the turbine blades through a sight glass formed in the casing wall. Radiation emitted by the heated turbine HGP components thus impinges on the pyrometer that then generates an electrical signal representative of the HGP components temperature. However, during engine operation the sight glass is exposed to high temperature exhaust gases that tend to cloud the sight glass and adversely affect the temperature reading. Furthermore, the thermal inspection system time response to change fuel rate and processing times for computing temperature and emissivities require significant improvements.

Accordingly, it would be desirable to have an improved smart real-time radiation thermometry system that addresses one or more of the aforementioned issues.

### BRIEF DESCRIPTION

In accordance with an embodiment of the invention, a smart radiation thermometry system including a turbine HGP component is provided. The smart radiation thermometry system includes an optical imaging sub-system configured to receive a continuous broad wavelength band radiation signal emitted by the HGP components. The thermometry system also includes a wavelength splitting sub-system in optical communication with the optical transmission system, wherein the wavelength splitting sub-system receives the continuous broad wavelength band radiation signal, and splits the radiation signal into multiple sub-wavelength band signals. The thermometry system further includes at least one detector array in optical communication with the wavelength-splitting sub-system, wherein the at least one detector array receives the multiple sub-wavelength band signals, and outputs respective analog voltage signals for each of the signals. The thermometry system further includes at least one high-speed multi-channel analog-to-digital converter (ADC) electrically coupled to the at least one detector array, wherein the at least one ADC digitizes respective analog voltage signals and outputs digital voltage signals. The thermometry system also includes at least one smart real time processing sub-system electrically coupled to the at least one high-speed multi-channel ADC. The smart real time processing sub-system calculates temperature and emissivity of the turbine HGP components based upon the reflection correction and multi-wavelength algorithms using digital voltage signals from the at least one high-speed multi-channel ADC. The at least one smart real time processing sub-system also transmits data indicative of the temperature, emissivity and other plurality of parameters within a pre-determined time period using a built-in communication unit. The at least one smart real time processing sub-system also outputs emergency alarm signals and controls either directly or via a controller one or more actuators coupled to the gas turbine based upon the data to ensure optimum and safe operation.

In accordance with another embodiment of the invention, a method for thermal measurement of a turbine HGP component is provided. The method includes receiving a continuous broad wavelength band radiation signal emitted by the turbine HGP components via an optical imaging sub-system. The method also includes receiving the radiation signal, and splitting the continuous broad wavelength band radiation signal of the turbine component into multiple sub-wavelength band signals via a wavelength splitting sub-system. The method also includes receiving the plurality of wavelength band signals and outputting respective analog voltage signals for each of the sub-wavelength band signals via at least one detector array. The method further includes digitizing respective analog voltage signals to output digital voltage signals via at least one high-speed multi-channel ADC. The method also includes performing multiple processing steps via at least one smart real time processing sub-system using the digital signals. The steps include checking and compensating the digital voltage signals, computing radiance temperature via a look-up table, calculating temperature and emissivity of the turbine component based upon the radiance temperature, reflection correction and multi-wavelength algorithms, and transmitting data indicative of the temperature, emissivity and other plurality of parameters within a pre-determined time period to a built-in communication unit. The steps also include outputting emergency alarm signals and controlling either directly or via a controller one or more actuators coupled to the gas turbine based upon the data to ensure optimum and safe operation of the turbine.

In accordance with another embodiment of the invention, a thermometry processing system for a turbine HGP component is provided. The thermometry processing system includes at least one smart real time processing sub-system electrically coupled to at least one detector array. The at least one smart real time processing sub-system receives digital voltage signals representative of each of a multiple sub-wavelength band signals from the component. The at least one smart real time processing sub-system also checks and compensates the digital voltage signals, and computes radiance temperature via a look-up table. The at least one smart real time processing sub-system also calculates temperature and emissivity of the turbine component based upon the radiance temperature, reflection correction and multi-wavelength algorithms. The at least one smart real time processing sub-system also transmits data indicative of the temperature, emissivity and other plurality of parameters within a pre-determined time period to a controller. The at least one smart real time processing sub-system also outputs emergency alarm signals and controls either directly or via a controller one or more actuators coupled to the gas turbine based upon the data to ensure optimum and safe operation of the turbine.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic illustration of a turbine system including a smart real time processing sub-system in accordance with an embodiment of the invention.
FIG. 2 is a simplified block diagram representation of the smart real time radiation thermometry system in the gas turbine system of FIG. 1.
FIG. 3 is a block diagram representation of software data processing that occurs within the smart real time processing sub-system in FIGs. 1 and 2.
FIG. 4 is a block diagram representation of further transmission of output data of the smart real time processing sub-system in FIGs. 1 and 2.
FIG. 5 is a block diagram representation of the hardware within the smart real time processing sub-system in FIGs. 1 and 2.
FIG. 6 is a simulated graphical illustration of spectral emissivity as a function of wavelength to determine permissible operating wavelengths in accordance with an embodiment of the invention.
FIG. 7 is a block diagram representation of an exemplary embodiment wherein the real time processing sub-system functions as an independent controller in accordance with an embodiment of the invention.
FIG. 8 is a block diagram representation of another exemplary embodiment wherein the real time processing sub-system generates an alarm signal.
FIG. 9 is a block diagram representation of yet another exemplary embodiment wherein the real time processing sub-system sends signals to the turbine controller of FIG. 1.
FIG. 10 is a flow chart representing steps in an exemplary method for radiation thermometry measurement of a turbine HGP component for real time control and prognosis in accordance with an embodiment of the invention.

### DETAILED DESCRIPTION

As discussed in detail below, embodiments of the invention include a system and method for thermal inspection of obj ects. As used herein, the term 'objects' refers to, but is not limited to, turbine HGP components like blades and nozzles. The system includes a smart radiation thermometry system that provides a real time gas turbine control and prognosis with a pre-determined time response, for example, of less than about 10 microseconds, which enables regulation of fuel injection into a combustor, for example, in a gas turbine system. It will be appreciated that although embodiments disclosed herein have been described with respect to a gas turbine system, such a smart real time processing sub-system may be employed in various similar applications. Furthermore, although one smart real time processing sub-system has been illustrated herein, any number of such smart processing sub-systems may be employed.

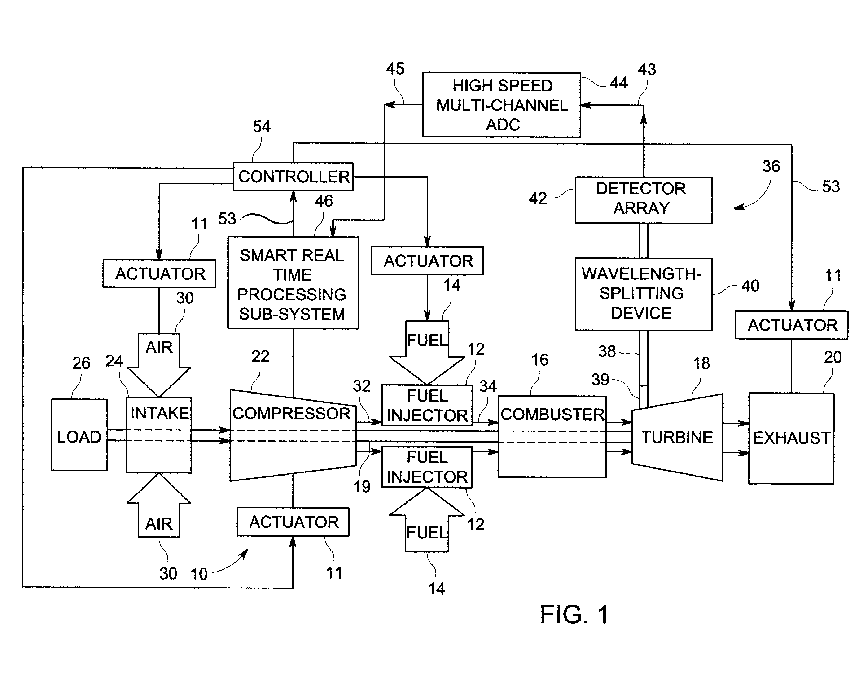

Turning now to the drawings, FIG. 1 is a schematic illustration of a turbine system 10 including a smart real time processing sub-system configured to estimate temperature and emissivity of a turbine component, for example, blades of a compressor 22, and control one or more actuators 11 coupled to the turbine system 10 in real time to ensure safe operation. The turbine system 10 includes a fuel injector 12, a fuel supply 14, and a combustor 16. As illustrated, the fuel supply 14 routes a liquid fuel and/or gas fuel, such as natural gas, to the gas turbine system 10 through the fuel injector 12 into the combustor 16. The fuel injector 12 is configured to inject and mix the fuel with compressed air. The combustor 16 ignites and combusts the fuel-air mixture, and then passes hot pressurized exhaust gas into a turbine 18. As will be appreciated, the turbine 18 includes one or more stators having fixed vanes or blades, and one or more rotors having blades that rotate relative to the stators. The exhaust gas passes through the turbine rotor blades, thereby driving the turbine rotor to rotate. Coupling between the turbine rotor and a shaft 19 will cause the rotation of the shaft 19, which is also coupled to several components throughout the gas turbine system 10, as illustrated. Eventually, the exhaust of the combustion process may exit the gas turbine system 10 via an exhaust outlet 20.

A compressor 22 includes blades rigidly mounted to a rotor, which is driven to rotate by the shaft 19. As air passes through the rotating blades, air pressure increases, thereby providing the combustor 16 with sufficient air for proper combustion. The compressor 22 may intake air to the gas turbine system 10 via an air intake 24. Further, the shaft 19 may be coupled to a load 26, which may be powered via rotation of the shaft 19. As will be appreciated, the load 26 may be any suitable device that may use the power of the rotational output of the gas turbine system 10, such as a power generation plant or an external mechanical load. For example, the load 26 may include an electrical generator, a propeller of an airplane, and so forth. The air intake 24 draws air 30 into the gas turbine system 10 via a suitable mechanism, such as a cold air intake. The air 30 then flows through blades of the compressor 22, which provides compressed air 32 to the combustor 16. In particular, the fuel injector 12 may inject the compressed air 32 and fuel 14, as a fuel-air mixture 34, into the combustor 16. Alternatively, the compressed air 32 and fuel 14 may be injected directly into the combustor for mixing and combustion.

As illustrated, the turbine system 10 includes an optical imaging sub-system 36 optically coupled to the turbine 18. In the illustrated embodiment, the optical imaging system 36 includes an optical connection 38 (e.g., optical borescope, fiber optic cable, optical waveguide, etc.) extending between a viewing port 39 into the turbine 18 and a wavelength-splitting sub-system 40. As discussed in detail below, the wavelength-splitting sub-system 40 is configured to receive continuous broad wavelength band radiation signal from the turbine HGP component, and to split the broad wavelength band image into multiple sub-wavelength band signals 41. At least one detector array 42 optically coupled to the wavelength-splitting sub-system 40 is configured to receive each of the sub-wavelength signals, and to output respective analog voltage signals 43. In the illustrated embodiment, the detector array 42 is electronically coupled to at least one high speed multi-channel analog-to-digital converter (ADC) 44 that digitizes the analog signals 43 to output digital signals 45. A smart real time processing sub-system 46 electrically coupled to the at least one high-speed multi-channel ADC 44 receives the digital signals 45. The smart real time processing sub-system 46 checks and compensates the digital voltage signals 45 and computes radiance temperature via a look-up table. The temperature and emissivity of the turbine component 22 is calculated based upon the radiance temperature, reflection correction and multi-wavelength algorithms. Data 53 indicative of the temperature and emissivity, and other multiple parameters are transmitted within a pre-determined time period, for example in a particular embodiment, less than about 10 microseconds to a controller 54. In one embodiment, the multiple parameters include signal/sensor health, signal confidence level, signal selection index, weighting factors, log file for temperature trend, temperature statistics etc. A communication unit (not shown) within the smart real time processing sub-system 46 outputs emergency alarms in an event that the data exceeds safe operating limits for the turbine system 10. In another embodiment, the smart real time processing sub-system 46 controls either directly or via a controller 54 the one or more actuators 11 coupled to the turbine system 10 based upon the data 53. For example, the actuators 11 may regulate fuel being injected into the combustor 16 based upon the calculated temperature. In another embodiment, the actuator may regulate flow of air into the compressor 22 based upon calculated data 53.

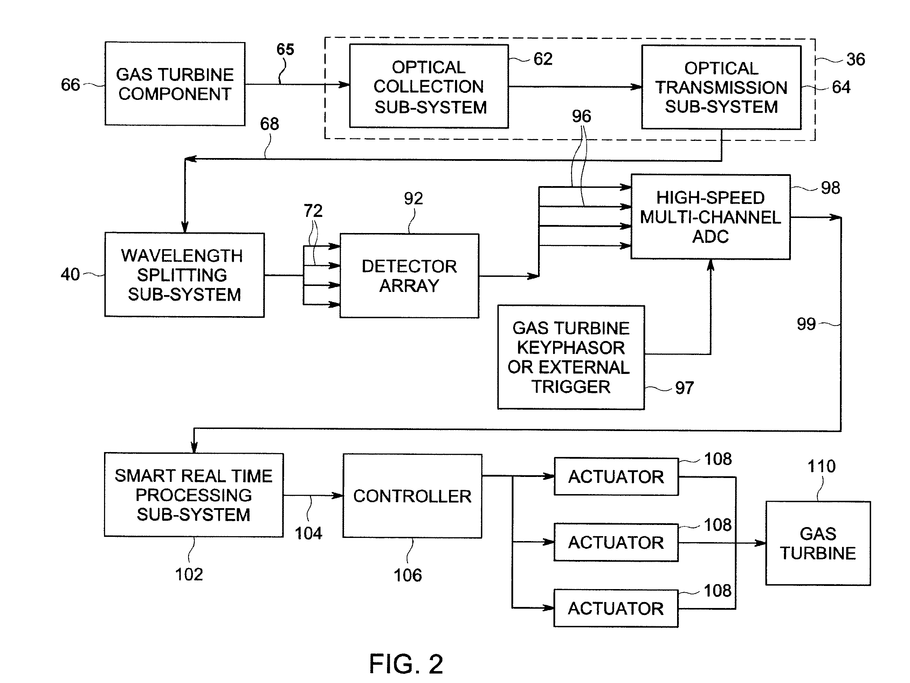

FIG. 2 is a simplified block diagram representation of a smart real time radiation thermometry system 60 in a gas turbine system, similar to FIG. 1. The optical system 36 (FIG. 1) further includes an optical imaging sub-system 62 and an optical transmission sub-system 64 that transmit a continuous broad wavelength band radiation signal 68 to the wavelength splitting sub-system 40 (FIG. 1). The optical imaging sub-system 62 receives radiation 65 emitted by a gas turbine HGP component, say a turbine blade 66, and transmits the radiation 65 to an optical transmission sub-system 64.

The optical transmission sub-system 64 transmits the continuous broad wavelength band radiation signal 68 to the wavelength splitting sub-system 40, which may include a series of lenses, prisms, mirrors, and fiber optics. The wavelength splitting sub-system 40 may include a series of lenses, prisms, mirrors, spectrometer and/or other reflective and/or refractive optics to split the continuous broad wavelength band radiation signal 68 into multiple sub-wavelength band signals 72. As will be appreciated, each multiple sub-wavelength band signals 72 includes a substantially similar spectral content (e.g., range of wavelengths) as the continuous broad wavelength band radiation signal 68. In addition, the resolution and field of view of each signal 72 are substantially similar to the continuous broad wavelength band signal 68. However, it should be appreciated that the intensity of each signal 72 may be inversely proportional to the number of signals 72 generated by the wavelength splitting sub-system 40. For example, because the wavelength splitting sub-system 40 in the illustrated embodiment generates four sub-wavelength band signals signals 72, the intensity of each signal 72 may be approximately 25% of the intensity of the continuous broad wavelength band signal 68. While more or fewer sub-wavelength band signals (e.g., 2, 3, 4, 5, 6, 7, 8, or more) may be generated in alternative embodiments, it should be appreciated that the maximum number of sub-wavelength band signals may be limited by the sensitivity of a detector array 92 receiving the multiple sub-wavelength band signals 72.

The detector array 92 outputs respective analog voltage signals 96 to at least one high speed multichannel ADC 98 that digitizes the signals 96 to output digital signals 99. A keyphasor or external trigger unit 97 may also be input into the high-speed multi-channel ADC 98. The keyphasor and external trigger unit 97 may be used to synchronize the at least one high-speed multi-channel ADC to a common time reference. The keyphasor and external trigger unit 97 can also be used to phase lock a specific HGP component, especially for rotating component like turbine blade. The digital signals 99 are input into a smart real time processing sub-system 102 (similar to 46 in FIG. 1). As discussed in FIG. 1, the smart real time processing sub-system 102 processes the digital signals 99 to output temperature and emissivity of the turbine HGP component 66. The data 104 is transmitted by a build-in communication unit (not shown) within the smart real time processing sub-system 102 to control directly or indirectly via a controller 106, actuators 108 that further regulate component parameters thus ensuring optimum operation of the gas turbine 110 within safe operating limits.

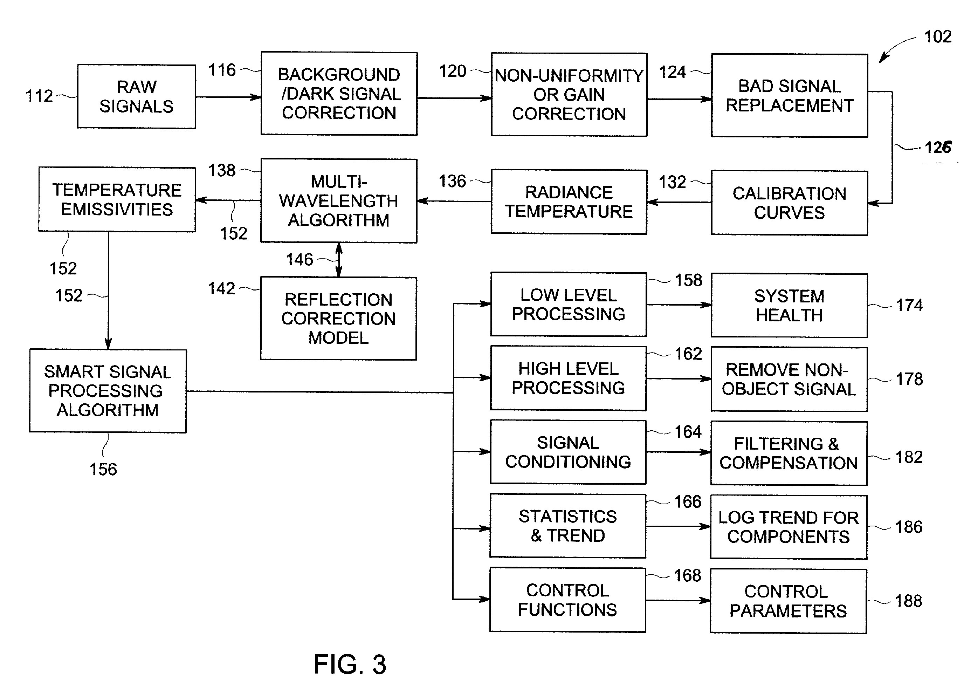

It should be noted that embodiments of the invention are not limited to any particular processor for performing the processing tasks of the invention. The term "processing sub-system," as that term is used herein, is intended to denote any machine capable of performing the calculations, or computations, necessary to perform the tasks of the invention. The term "processing subsystem" is intended to denote any machine that is capable of accepting a structured input and of processing the input in accordance with prescribed rules to produce an output. It should also be noted that the phrase "configured to" as used herein means that the processor is equipped with a combination of hardware and software for performing the tasks of the invention, as will be understood by those sketched in the art. FIG. 3 is a block diagram representation of software data processing that occurs within the smart real time processing sub-system 102 (FIG. 2). Raw digital signal data 112 from the at least one high-speed multi-channel ADC (98) (FIG. 2) that are fed into the real time processing sub-system 102 undergo various standard preprocessing techniques to improve accuracy of the data. The various corrective models are performed in a certain flow to ensure real-time processing of data. The raw signals 112 are input into a background correction module 116 that corrects for dark or background signals. The background corrected data 118 is input into the non-uniformity or gain correction module 120, and the non-uniformity or gain corrected data 122 is further input into the bad-signal replacement module 124. The data output 126 from the bad signal replacement module 124 is input into a calibration module 132, wherein a calibration is performed via the look-up table 'voltage' vs. 'temperature' stored in the smart real-time processing sub-system to determine radiance temperature 136. The data 136 indicative of the radiance temperature is input into an embedded multi-wavelength algorithm 138 with correction factors from a reflection correction module 142. Radiation from the component of interest (66, FIG. 2) collected by the optical imaging system (62, 64, FIG. 2) may include two parts: emitted radiation from the blade, and reflected radiation from adjacent components such as, but not limited to, shrouds, nozzle and the like. Hence, in order to eliminate the reflected component from the radiation collected, a reflection correction is performed. The reflection corrected data 146 is further processed via the multi-wavelength algorithm 138 to output raw temperature and emissivity data 152 of the components. To enhance the processing speed, the algorithm may need to be implemented in parallel processing mode.

Furthermore, the raw temperature and emissivity data 152 is input into smart signal processing algorithm 156 which includes low level processing 158, high level processing 162, signal conditioning 164, statistics and trend analysis 166, and control functions 168. The low level processing 158 acquires and assesses health of the at least one high-speed multi-channel ADCs 174, while high level processing 162 ensures removal of noise or non-object signal 178, (for example, flame or particle signals rejection), compare signals, blend or discard signals, compute quality index on signal, compute status flags to indicate system health like bad detector and bad ADC, etc. Similarly, signal conditioning 164 performs filtering and compensation for thermal effects 182. The filtering function can output filtered signal with various data rate to match the capability of the controller or actuator. The statistics and trend analysis 166 outputs a log trend 186 for each component. The control functions module 168 outputs control parameters 188 to control directly or via a controller one or more actuators coupled to the gas turbine.

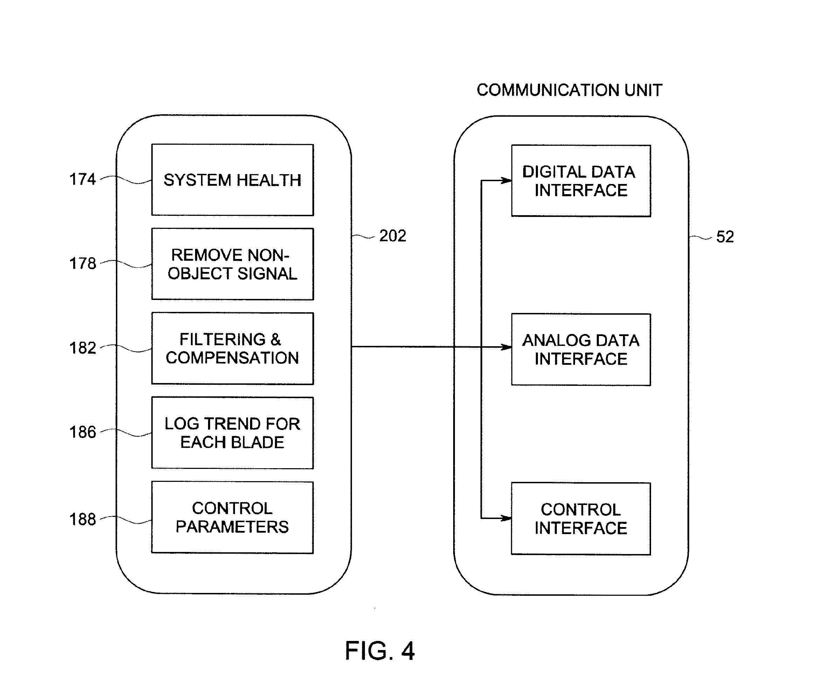

FIG. 4 is a block diagram representation of further transmission of the output data 202 of the smart real time processing sub-system 102 (FIG. 2). The data 202 is fed into a build-in communication unit 52 within the smart real-time processing sub-system 102. The communication unit 52 includes three interfaces. One is a digital data interface and one is an analog data interface, wherein data is transmitted further to a controller 106 (FIG. 2) or to one or more actuators 108 (FIG. 2). Another one is a control interface, wherein data in the memory can be read, wrote and updates. Calibration data or embedded software can be updated, and log data of the trend file can be downloaded via the control interface. Furthermore, the digital data interface includes, but not limited to, Firewire (IEEE1394), Ethernet, Gigabit Ethernet, USB, RS232, and Camera Link etc. The analog data interface can output data in the voltage, current and frequency range that required by the controller or actuators. The control interface includes, but not limited to, Firewire (IEEE1394), Ethernet, Gigabit Ethernet, USB, RS232, and Camera Link etc.

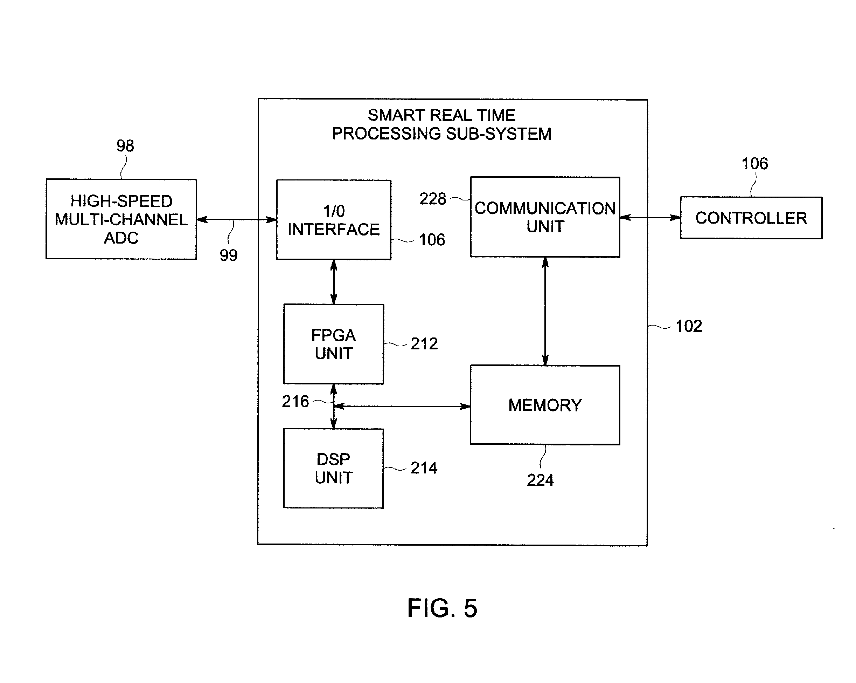

FIG. 5 is a block diagram representation of the hardware within the smart real time processing sub-system 102 (FIG. 2) or 46 (FIG. 1). Output 99 from the at least one high-speed ADC 98 (FIG 2) is input into the smart real time processing sub-system 102 via input-output (I/O) interfaces 106. A field-programmable gate array (FPGA) unit 212 is embedded that is electrically coupled to the I/O interfaces 106. Furthermore, a digital signal processing (DSP) unit 214 receives input signals 216 from the FPGA unit 212 and stores data in memory 224. A communication unit 228 exchanges data 232 with the FPGA 212, DSP 214 and memory 224, and outputs the signals 232 (FIG. 1). The embedded data processing algorithms are implemented in either FPGA unit 212 or DSP unit 214. To enhance the real-time data processing speed, the algorithms are implemented in parallel modes in either FPGA unit 212 or DSP unit 214. The calibration data are stored in the memory 224. The results of the low level processing 158, high level processing 162, signal conditioning 164, statistics and trend 166, and control functions 168 are also stored in the memory. The communication unit 228 can access the memory 224 and output necessary digital or analog data to gas turbine controller 106 (FIG. 2) or directly to actuator.

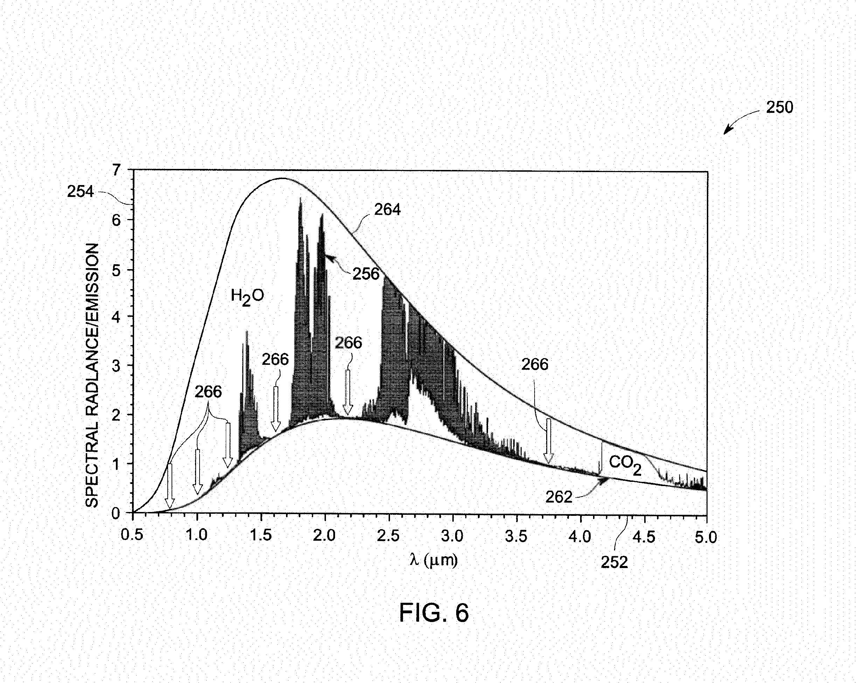

FIG. 6 is a simulated graphical illustration 250 of spectral emissivity as a function of wavelength. The X-axis 252 represents wavelength in micron, while the Y-axis 254 represents spectral emissivity which is normalized, and hence, dimensionless. In operation, the radiation emitted by an obj ect, such as, but not limited to, turbine blade may be minimized by absorption due to other gas mixture emissions such as H₂O and CO₂, thus resulting in low signal to noise ratio measurements. The graph 250 illustrates permissible operating wavelength bands, wherein such gas mixture emissions are minimal, and thus, probability of obtaining high signal to noise ratio measurements is maximized. As illustrated herein, curves 256 represent emissivity of a mixture of H₂O and CO₂ as a function of wavelength. Similarly, curve 262 represents the actual emission of object and curve 264 represents hot gas emission. Thus, it may be inferred that the permissible operating wavelength bands (wherein the H₂O and CO₂ emissions are negligible) are 0.5-1.1 µm, 1.2-1.3 µm, 1.5-1.7 µm, 2.0-2.4 µm and 3.5-4.2 µm referenced by numeral 266.

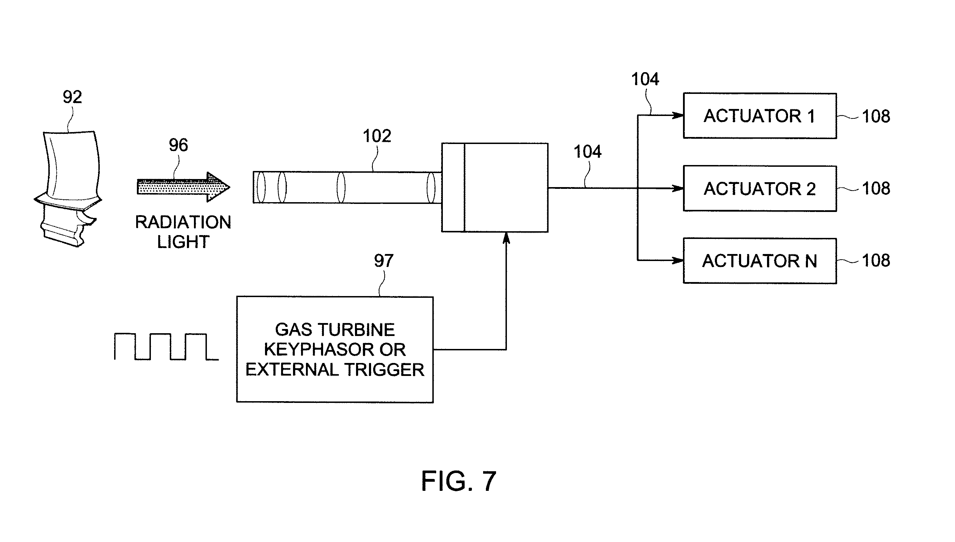

FIGs. 7-9 are block diagram representations of alternate exemplary embodiments of functionalities of the smart real time processing sub-system 102. For example, FIG. 7 illustrates an embodiment wherein the real time processing sub-system 102 (FIG. 2) directly regulates the actuators 108 (FIG. 2) bypassing the controller 108 (FIG. 2). In other words, the real time processing subsystem functions as an independent controller. Specifically, the signals 96 (FIG. 2) from the detector array 92 are processed by the real time processing subsystem 102. However, instead of transmitting the output signals 104 (FIG. 2) to the controller 108, the real time processing sub-system 102 directly regulates the actuators 108 (FIG. 2).

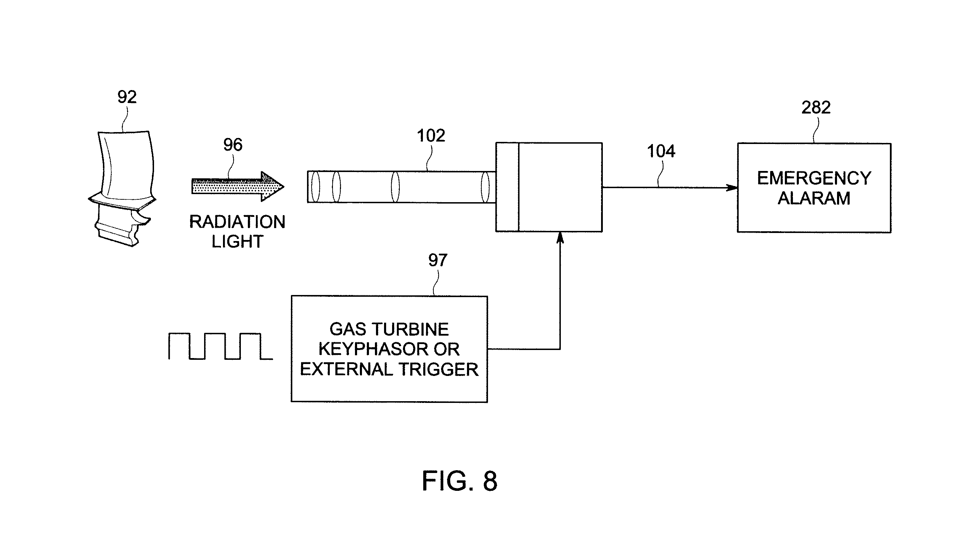

FIG. 8 is a block diagram representation of an additional functionality of the real time processing sub-system 102. The real time processing sub-system 102 generates an alarm signal/s 282 based upon the output signals 104 (FIG. 2), in an event that the temperature/emissivity values are beyond pre-determined limits of operation. Furthermore, the engine may be shut down based upon the generated alarm signal. Thus, the real time processing sub-system may function as an emergency device.

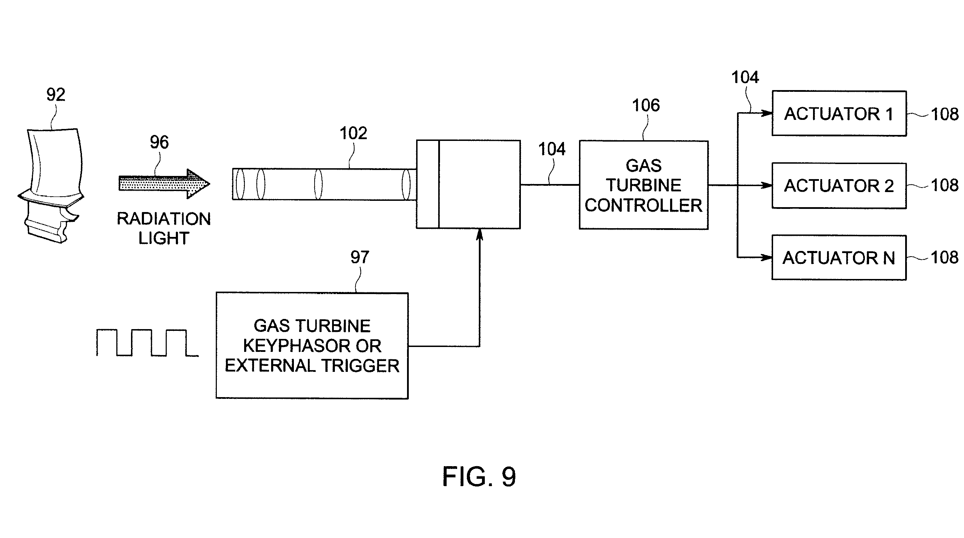

FIG. 9 is a block diagram representation of an exemplary embodiment wherein the real time processing sub-system 102 transmits the output signals 104 to a controller 106 (FIG. 2) that further controls the actuators 108. In a particular embodiment, the controller 106 is a full authority digital engine controller (FADEC). In such an embodiment, the controller makes a decision regarding further action based upon the output signals 104. In other words, the real time processing sub-system 102 may function as a smart sensor for an existing controller. In one embodiment, an keyphasor or external trigger 97 (FIG. 2) may also be applied to the smart real time processing sub-system 102. The keyphasor or external trigger 97 can be used to synchronize the at least one high-speed multi-channel ADC to the circumferential reference of the gas turbine and identify particular component of the gas turbine. This function is particularly important if the object is a fast moving one, like the gas turbine blade. The keyphasor or external trigger 97 can also be used to synchronize the smart real-time radiation thermometry system to other instruments.

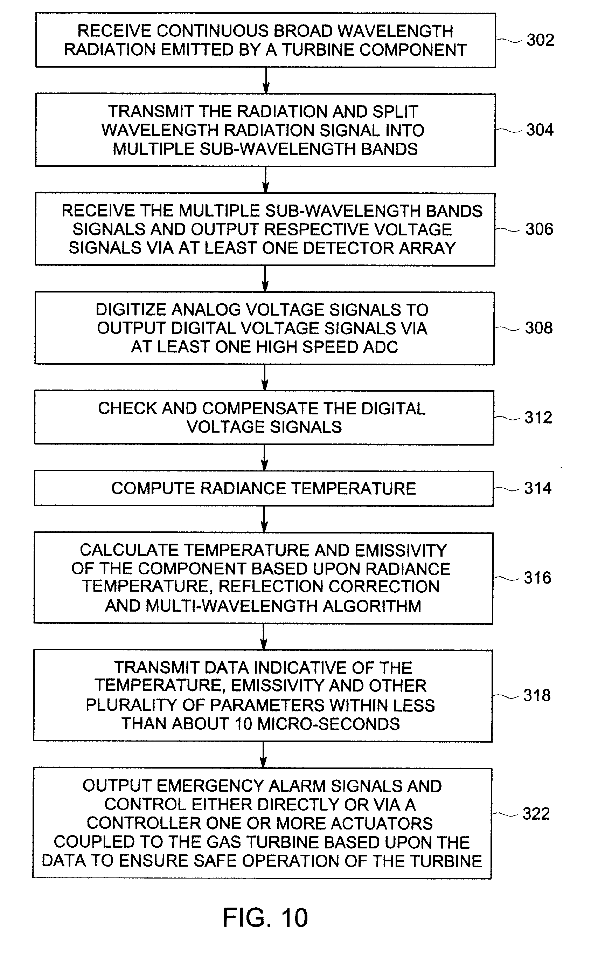

FIG. 10 is a flow chart representing steps in an exemplary method for thermal measurement of a turbine component. The method includes receiving a continuous broad wavelength band radiation signal emitted by the turbine component via an optical imaging sub-system in step 302. The radiation signal is transmitted and split into multiple sub-wavelength band signals via a wavelength splitting sub-system in step 304. Multiple sub-wavelength band signals are received by at least one detector array and respective analog voltage signals are output in step 306. The respective voltage signals are digitized to output digital voltage signals in step 308. The digital signals are received by a smart real time processing sub-system and processed in multiple steps including checking and compensating the digital voltage signals in step 312. A radiance temperature is computed via a look-up table in step 314. The temperature and emissivity of the turbine component are calculated based upon the radiance temperature, reflection correction, and multi-wavelength signals in step 316. Data indicative of the temperature, emissivity and other multiple parameters are transmitted within a pre-determined time period, for example, less than about 10 micro-seconds to a communication unit in step 318. In one embodiment, emergency alarm signals are output in step 322 to shut down the turbine system in order to operate within safe limits. In another embodiment, one or more actuators are either directly or indirectly (via a controller) controlled based upon the data received to ensure safe operation of the turbine.

The various embodiments of a smart thermometry system described above thus provide a way to achieve a convenient and efficient means for real time measurement of temperatures of objects such as, but not limited, to turbine blades. The technique significantly improves the system time response that enables desirable regulation of fuel injection among other parameters. Furthermore, the system may be implemented as an independent controller, an emergency device, and a smart-sensor for existing control system depending on how the temperature and emissivity information is used. The real time capability combined with multi-wavelength information further provides redundancy in control system, higher temperature accuracy, immunity to optical system contamination, and higher reliability to reject false low or high object temperature. The technique also allows for cost effective means due to simplicity and miniature size of the design. The technique can also be readily implemented in existing gas turbine system without modification of the current control hardware and software.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein. Furthermore, the skilled artisan will recognize the interchangeability of various features from different embodiments. Similarly, the various features described, as well as other known equivalents for each feature, can be mixed and matched by one of ordinary skill in this art to construct additional systems and techniques in accordance with principles of this disclosure.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A smart real-time radiation thermometry system (60) comprising:
a turbine component (66);
an optical imaging sub-system (36) configured to receive a continuous broad wavelength band radiation signal emitted by the component;
a wavelength splitting sub-system (40) in optical communication with the optical transmission sub-system, the wavelength splitting sub-system configured to transmit the continuous broad wavelength band radiation signal (68), and split the radiation signal into a plurality of sub-wavelength band signals (41,72);
at least one detector array (42,92) in optical communication with the wavelength-splitting sub-system, wherein the at least one detector array is configured to receive the plurality of sub-wavelength band signals, and to output respective analog voltage signals (43,96) for each of the signals;
at least one high-speed multi-channel analog-to-digital converter (ADC) (44,98) electrically coupled to the at least one detector array, the ADC configured to digitize respective analog voltage signals and output digital voltage signals (45,99); and
at least one smart real time processing sub-system (46,102) electrically coupled to the at least one high-speed multi-channel ADC, is configured to:
check and compensate the digital voltage signals;
compute radiance temperature via a look-up table;
calculate temperature and emissivity of the turbine component based upon the radiance temperature, reflection corrections and multi-wavelength algorithm;
output data (53) indicative of the temperature, emissivity and other plurality of parameters within a pre-determined time period; and
output emergency alarm signals and control either directly or via a controller one or more actuators coupled to the gas turbine based upon the data to ensure safe operation of the turbine.

2. The system (60) of claim 1, wherein the at least one smart real time processing sub-system (46,102) transmits the alarm signals in an event of the temperature of the component exceeding a pre-determined limit.

3. The system (60) of either one of claim 1 or 2, wherein the optical system (36) comprises:
an optical imaging sub-system (62) configured to receive the continuous broad wavelength band radiation signal from the gas turbine component (66); and
an optical transmission sub-system (64) configured to transmit the continuous broad wavelength band radiation signal (68) from the optical imaging sub-system; and
a wavelength splitting sub-system (40) to split the continuous broad wavelength band radiation signal of the turbine component into a plurality of sub-wavelength band signals (41,72).

4. The system (60) of any one of the preceding claims, wherein said pre-determined time period is less than about 10 microseconds.

5. A method for thermal measurement of a turbine component comprising:
receiving (302) a continuous broad wavelength band radiation signal emitted by the turbine component via an optical imaging sub-system;
splitting (304) the continuous broad wavelength band radiation signal of the turbine component into a plurality of sub-wavelength band signals via a wavelength splitting sub-system;
receiving (306) the plurality of wavelength band signals and outputting respective analog voltage signals for each of the sub-wavelength band signals via at least one detector array;
digitizing (308) respective analog voltage signals to output digital voltage signals via the at least one high-speed multi-channel ADC; and
performing a plurality of processing steps via at least one smart real time processing sub-system receiving the digital signals, the steps comprising:
checking and compensating (312) the digital voltage signals;
computing radiance temperature (314) via a look-up table;
calculating temperature and emissivity (316) of the turbine component based upon the radiance temperature, reflection correction and multi-wavelength algorithm;
outputting data (318) indicative of the temperature, emissivity and other plurality of parameters within a pre-determined time period; and
output emergency alarm signals and control (322) either directly or via a controller one or more actuators coupled to the gas turbine based upon the data to ensure safe operation of the turbine.

6. The method of claim 5, further comprising transmitting the emergency alarm signals in an event of the temperature exceeding a pre-determined limit.

7. The method of either one of claim 5 or 6, wherein said outputting data comprises outputting data in less than about 10 micro-seconds.

8. A thermometry processing system for a turbine component (66) comprising:
at least one smart real time processing sub-system (46,102) electrically coupled to at least one detector array (42,92) via at least one high-speed multi-channel ADC (44,98), the real-time processing sub-system configured to:
receive digital voltage signals (45,99) representative of each of a plurality of sub-wavelength band signals (41,72) from the component;
check and compensate the digital voltage signals;
compute radiance temperature via a look-up table;
calculate temperature and emissivity of the turbine component based upon the radiance temperature, reflection correction and multi-wavelength algorithm;
output data indicative of the temperature, emissivity and other plurality of parameters within a pre-determined time period; and
output emergency alarm signals and control either directly or via a controller one or more actuators coupled to the gas turbine based upon the data to ensure safe operation of the turbine.

9. The thermometry system of claim 8, wherein the at least one smart processing sub-system (46,102) transmits an alarm signal in an event of the temperature exceeding a pre-determined limit.

10. The thermometry system of either one of claim 8 or 9, wherein said pre-determined time period comprises less than about 10 microseconds.

11. The thermometry system of claim 8, further comprising:
an optical imaging sub-system (62) configured to receive a continuous broad wavelength band radiation signal (68) emitted by the turbine component (66);
an optical transmission sub-system (64) configured to transmit the continuous broad wavelength band radiation signal from the optical imaging sub-system to the wavelength splitting sub-system; and
a wavelength splitting sub-system (40) to split the continuous broad wavelength band radiation signal of the turbine component into a plurality of sub-wavelength band signals (41,72);
at least one detector array (42,92) in optical communication with the wavelength-splitting sub-system, wherein the at least one detector array is configured to receive the plurality of sub-wavelength band signals, and to output respective analog voltage signals for each of the signals; and
at least one high-speed multi-channel analog-to-digital converter (ADC) (44,98) electrically coupled to the at least one detector array, the ADC configured to digitize respective analog voltage signals (43,96) and output digital voltage signals (45,99) to the smart real time processing sub-system (46,102).
